# EUROPÄISCHE PATENTSCHRIFT

(11) **EP 2 432 858 B1**
(45) Veröffentlichungstag und Bekanntmachung des Hinweises auf die Patenterteilung: **27.11.2013**
(21) Anmeldenummer: 10722061.8
(22) Anmeldetag: 21.05.2010
(51) Int. Cl.: C10L 5/44, C10L 9/08

(54) **VORRICHTUNG ZUR HYDROTHERMALEN KARBONISIERUNG VON BIOMASSE**
DEVICE FOR HYDROTHERMAL CARBONIZATION OF BIOMASS
DISPOSITIF DE CARBONISATION HYDROTHERMALE DE BIOMASSE

(30) Priorität: 22.05.2009 DE 102009022364
(43) Veröffentlichungstag der Anmeldung: 28.03.2012
(73) Patentinhaber: Addlogic Labs GmbH, 71131 Jettingen (DE)
(72) Erfinder: HAFEN, Ulrich, 89542 Herbrechtingen (DE); TJIOK, Dave, 72213 Altensteig (DE); KLOTSCHE, Michael, 01809 Heidenau (DE); STACHELBERG, Burkhard von, 70569 Stuttgart (DE); SZILAGYI, Gabriel, 71032 Böblingen (DE); GORZELLIK, Oliver, 71032 Böblingen (DE)
(74) Vertreter: Gauss, Nikolai
(86) Internationale Anmeldenummer: PCT/EP2010/057077
(87) Internationale Veröffentlichungsnummer: WO 2010/133696

(56) Entgegenhaltungen:
- WO-A2-2008/138637
- DE-A1- 2 117 364
- DE-T2- 60 212 116
- US-A- 3 578 649
- SCHUHMACHER J P ET AL: "Chemical structure and properties of coal. XXVI -- Studies on artificial coalification" FUEL, IPC SCIENCE AND TECHNOLOGY PRESS, GUILDFORD, GB, Bd. 39, Nr. 3, 1. Mai 1960 (1960-05-01), Seiten 223-234, XP008091932 ISSN: 0016-2361

## Beschreibung

Die Erfindung betrifft eine Vorrichtung zur hydrothermalen Karbonisierung von Biomasse mit einem einen Reaktionsraum aufweisenden Reaktionsbehälter.

Die hydrothermale Karbonisierung ist eine chemische Reaktion, bei der Biomasse in Kohleprodukte, Wasser sowie in Wasser gelöste Mineralstoffe umgesetzt wird. Die chemische Reaktion der hydrothermalen Karbonisierung von Biomasse stellt sich in einem sauren Millieu und in Anwesenheit von Ka-talysatoren bei einer Temperatur T im Bereich von T ≈ 160 bis 210 °C und einem Druck P im Bereich 10 bar ≤ P ≤ 20 bar ein. Für die Reaktion ist daher ein Druckgefäß erforderlich. Die Reaktion verläuft exotherm. Bei der hydrothermalen Karbonisierung wird kein CO₂ freigesetzt. Eine vollständige Umwandlung von Biomasse in Wasser und Kohleprodukte erfordert jedoch, dass der Druck P und die Temperatur T in den genannten Bereichen über einen relativ langen Zeitraum, d.h. 2 bis 18 Stunden, aufrechterhalten werden.

Eine Vorrichtung der eingangs genannten Art ist aus der DE-10 2007 022 840 A1 bekannt. Diese Vorrichtung umfasst einen mit Biomasse befüllbaren Reaktionsbehälter. Der Reaktionsbehälter hat einen Anschluss für das Zuführen von Wasserdampf. Damit kann die Biomasse auf eine Temperatur erwärmt werden, die für die hydrothermale Karbonisierung erforderlich ist. Für das Einstellen des Drucks im Reaktionsbehälter hat die Vorrichtung ein Drucksteuerventil. Das Drucksteuerventil ermöglicht, die Temperatur im Reaktionsbehälter über den Dampfdruck von Wasser einzustellen.

Die deutsche Offenlegungsschrift DE 2 117 364 A beschreibt ein Verfahren zur Abführung der Reaktionswärme bei der Polymerisation olefinisch ungesättigter Verbindungen in einem geschlossenen System durch Verdampfen von Monomeren, Kondensation der Dämpfe durch Wärmeaustausch mit einem Kühlmedium in einer außerhalb des Reaktionsraumes, aber mit diesem verbundenen Kondensationszone und Rückführen in den Reaktionsraum, wobei die Kondensationszone Inertgas enthält, wobei die pro Zeiteinheit abgeführte Wärmemenge durch eine Änderung der Wärmeaustauscherfläche geregelt wird, und wobei die Regelung durch die Polymerisationstemperatur gesteuert wird. Die Wärmeaustauschfläche kann durch Abfuhr von Inertgas aus der Kondensationszone vergrößert bzw. durch Zufuhr von Inertgas in die Kondensationszone verkleinert werden. DE 2 117 364 A offenbart auch eine zur Durchführung des Verfahrens angepasste Vorrichtung mit einem Reaktionsapparat und einer Einrichtung zur regelbaren Abfuhr der Reaktionswärme durch Kondensation.

US-A-3 578 649 offenbart verschieden ausgeführte Varianten eines Reaktionsapparates mit einem Siedekühler für Polymerisationsreaktionen von Vinylmonomeren.

Aufgabe der Erfindung ist es, eine Vorrichtung und ein Verfahren zur hydrothermalen Karbonisierung von Biomasse bereitzustellen, die eine stabile Regelung für Druck und Temperatur im Reaktionsraum ermöglichen.

Eine solche stabile Regelung gewährleistet, dass auch bei Auftreten von Störungen, die z.B. durch die Zusammensetzung der Biomasse bedingt sind, der Druck- und die Temperatur der Biomasse im Reaktionsraum ohne größere Eingriffe auf für die chemische Reaktion der hydrothermalen Karbonisierung günstigen Werten gehalten werden können.

Diese Aufgabe wird durch eine Vorrichtung zur hydrothermalen Karbonisierung von Biomasse mit den Merkmalen des Anspruchs 1 und ein Verfahren mit den Merkmalen des Anspruchs 13 gelöst.

Vorteilhafte Ausführungsformen der Erfindung sind in den Unteransprüchen angegeben.

Aufgrund des einfachen Aufbaus einer erfindungsgemäßen Vorrichtung zur hydrothermalen Karbonisierung von Biomasse kann diese problemlos fernab von jedweder Infrastruktur betrieben werden. Sie eignet sich damit insbesondere für den Einsatz in Entwicklungsländern.

Bei der Erfindung wirkt die mit dem Reaktionsraum verbundene Rohrleitung entsprechend dem Prinzip des Wärmerohrs als Wärmeübertrager. Allerdings unterscheidet sich die Rohrleitung von einem klassischen Wärmerohr: Wie ein klassisches Wärmerohr ist die Rohrleitung zwar rohrförmig ausgebildet. Ein klassisches Wärmerohr enthält jedoch ein hermetisch gekapseltes Volumen. Dieses Volumen ist mit einem Arbeitsmedium befüllt. Ein klassisches Wärmerohr hat einen Abschnitt für die Aufnahme von Wärme aus einer Wärmequelle und einen davon getrennten Abschnitt, in dem Wärme an eine Wärmesenke abgegeben wird. Bei Wärmeeintrag aus der Wärmequelle wird das Arbeitsmedium verdampft. Das verdampfte Arbeitsmedium strömt in den Abschnitt, aus dem Wärme in die Wärmesenke abgegeben wird. Hier kondensiert das Arbeitsmedium. Das kondensierte Arbeitsmedium wird dann im Wärmerohr aufgrund der Schwerkraft oder aufgrund von Kapillarkraft in den Abschnitt für die Aufnahme von Wärme aus der Wärmequelle zurückgeführt, wo es wieder verdampft.

Bei der hydrothermalen Karbonisierung von Biomasse entstehen Ablagerungen, die den Reaktionsbehälter verschmutzen. Ein klassisches Wärmerohr in einer Vorrichtung zur hydrothermalen Karbonisierung wird daher schnell mit einer Kruste aus Ablagerungen überzogen. Das hat zur Folge, dass schon nach kurzer Betriebsdauer der Wärmewiderstand an den Grenzflächen von Reaktionsbehälter und Wärmerohr stark zunimmt. Es hat sich herausgestellt, dass deshalb im Reaktionsbehälter einer Vorrichtung zur hydrothermalen Karbonisierung von Biomasse ein klassisches Wärmerohr nicht eingesetzt werden kann.

Vor diesem Hintergrund liegt der Erfindung die Erkenntnis zugrunde, dass eine mit dem Reaktionsraum verbundene Rohrleitung, die eine Kondensationsstrecke für Wasserdampf aufweist, als Wärmerohr wirkt, durch das Wärme aus dem Reaktionsraum auch bei Verschmutzung effizient abgeführt werden kann. Bei der Erfindung wird die Wärme mit Arbeitsmedium in Form von Wasserdampf transportiert, der aus dem Reaktionsraum stammt. Der Wärmetransport erfolgt also mit einem ungekapselten Arbeitsmedium. Dies hat zur Folge, dass der Wärmewiderstand, der für das Abführen von Wärme aus dem Reaktionsraum überwunden werden muss, sehr viel geringer ist als bei einem klassischen Wärmerohr mit gekapseltem Arbeitsvolumen.

In Weiterbildung der Erfindung ist die Rohrleitung als Steigrohr ausgebildet. Auf diese Weise wird das Rückführen von kondensiertem Wasserdampf in den Reaktionsbehälter über die Schwerkraft ermöglicht.

In Weiterbildung der Erfindung ist der Kondensationsstrecke der Rohrleitung ein Wärmetauscher für das Abführen von Wärme zugeordnet. Auf diese Weise wird das Abführen von Wärme aus der Rohrleitung mit hoher Übertragungsrate gewährleistet. Indem der Wärmetauscher sekundärseitig an ein Leitungssystem für einen Wärmeträger angeschlossen ist, kann die mit dem Wärmetauscher abgeführte Wärmemenge gesteuert werden.

Bevorzugt ist in dem Leitungssystem für den Wärmeträger ein Temperatursensor angeordnet. Vor und hinter dem Wärmetauscher sind Temperatursensoren in das Leitungssystem für den Wärmeträger integriert. Diese Maßnahmen ermöglichen es, die aus dem Wärmetauscher in den Wärmeträger abgegebene Wärmemenge zu erfassen. Für das Fördern des Wärmeträgers ist in dem Leitungssystem eine Pumpe vorgesehen. Indem der Wärmetauscher in einen Wärmeträgerkreislauf angeordnet wird, ist für den Betrieb der Vorrichtung zur hydrothermalen Karbonisierung insbesondere kein Anschluss an das Wassernetz erforderlich.

Das Steuerorgan in dem Pufferabschnitt kann ein in der Rohrleitung angeordnetes Druckbegrenzungsventil und ein Absperrdruckventil umfassen. Bevorzugt ist das Druckbegrenzungsventil mit einstellbarem Ansprechdruck ausgebildet. Diese Maßnahme ermöglicht es, die Temperatur im Reaktionsraum über den Dampfdruck einzustellen. Vorteilhafterweise ist das Drucksteuerventil in einem zu dem Pufferabschnitt weisenden Abschnitt der Kondensationsstrecke angeordnet.

Die Vorrichtung umfasst günstigerweise eine Steuereinheit, die das Überdruckventil und das Drucksteuerventil aufgrund der Signale des Masseflusssensors und der Temperatursensoren steuert. Diese Maßnahme ermöglicht, dass im Reaktionsraum des Reaktionsbehälters über einen langen Zeitraum Reaktionsbedingungen aufrechterhalten werden können, die für die chemische Reaktion der hydrothermalen Karbonisierung günstig sind.

Das Druckbegrenzungsventil ist in einem als Dampfablasskanal wirkenden Leitungsabschnitt angeordnet. Dieser Leitungsabschnitt mündet günstigerweise in einen zu dem Pufferabschnitt weisenden Endabschnitt der Kondensationsstrecke, der mit einem vor dem Pufferabschnitt liegenden Bereich der Rohrleitung als Steuerkanal wirkt. Über diesen als Steuerkanal wirkenden Abschnitt der Rohrleitung lässt sich die wirksame Länge der Kondensationsstrecke einstellen. Der Leitungsabschnitt mit dem Druckbegrenzungsventil kann auch zwischen der Kondensationsstrecke und dem Pufferabschnitt in die Rohrleitung münden.

Von Vorteil ist es, die Vorrichtung zur hydrothermalen Karbonisierung mit einem Pressluftkompressor auszurüsten, mit dem der als Steuerkanal wirkende Abschnitt der Rohrleitung mit Pressluft ausgefüllt werden kann. Durch Befüllen des als Steuerkanal wirkenden Abschnitts der Rohrleitung mit Pressluft lässt sich die wirksame Länge der Kondensationsstrecke ebenfalls einstellen. Dies ermöglicht insbesondere das schnelle Aufheizen von Biomasse im Reaktionsbehälter zu Beginn der hydrothermalen Karbonisierungsreaktion, da hierdurch auch bei einer geringen Gas- bzw. Luftmenge im Steuerkanal ein unerwünschter Abfluss von Wärme über die Rohrleitung und den Wärmetauscher vermieden werden kann.

Indem eine Heizeinrichtung für den Reaktionsraum vorgesehen ist, können Druck und Temperatur im Reaktionsbehälter für ein Anfahren der chemischen Reaktion der hydrothermalen Karbonisierung von Biomasse eingestellt werden. Die Heizeinrichtung kann insbesondere ein Heizungsrohr für das Zuführen von Dampf in den Reaktionsraum umfassen. Für das Einfüllen von Biomasse und für das Entfernen der Reaktionsprodukte aus dem Reaktionsbehälter sind an diesem ein Einlass- und ein Auslassventil ausgebildet.

Die Vorrichtungen zur hydrothermalen Karbonisierung von Biomasse können auf einer Anlage für die hydrothermale Karbonisierung von Biomasse kombiniert werden. Auf diese Weise kann die Reaktionswärme, die bei der hydrothermalen Karbonisierung in einem Reaktionsbehälter freigesetzt wird, dazu verwendet werden, die hydrothermale Karbonisierung in einem anderen Reaktionsbehälter auszulösen.

Vorteilhafte Ausführungsbeispiele der Erfindung sind in den Zeichnungen dargestellt und werden nachfolgend beschrieben. Es zeigen
- Fig. 1: eine Vorrichtung zur hydrothermalen Karbonisierung von Biomasse;
- Fig. 2: einen Ausschnitt einer Rohrleitung der Vorrichtung mit einer Kondensationsstrecke für Wasserdampf in einem ersten Betriebszustand;
- Fig. 3: den Abschnitt der Rohrleitung der Vorrichtung in einem zweiten Betriebzustand; und
- Fig. 4: eine Anlage zur hydrothermalen Karbonisierung von Biomasse mit mehreren Reaktionsbehältern.

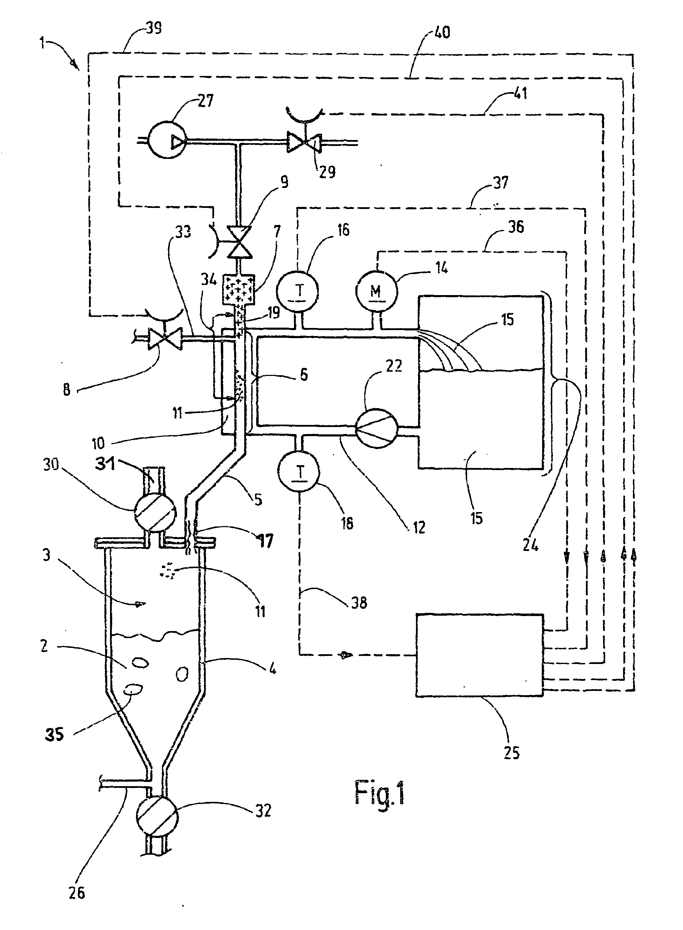

Die in Fig. 1 gezeigte Vorrichtung 1 zur hydrothermalen Karbonisierung von Biomasse 2 hat einen Reaktionsbehälter 4 mit einem Reaktionsraum 3. In dem Reaktionsbehälter 4 kann Biomasse, wie z.B. pflanzliche Abfall- und Reststoffe, etwa Rückstände aus der Pflanzenölgewinnung, auch gebrauchtes Pferdestreu, organische Hausabfälle, Gärreste von Biogasanlagen etc. unter Ausschluss von Luftsauerstoff zu Kohleprodukten in Form von Humus, Braunkohle oder Steinkohle sowie Mineralstoffen in wässriger Lösung umgesetzt werden. Der Reaktionsbehälter 4 ist als Autoklav ausgebildet. Der Reaktionsraum 3 des Reaktionsbehälters 4 ist über eine Leitung 31 durch ein Einlassventil 30 mit Biomasse 2 befüllbar. Dem Reaktionsbehälter 4 ist eine Heizeinrichtung mit einem Heizungsrohr 26 zugeordnet. Über das Heizungsrohr 26 kann die Biomasse 2 im Reaktionsraum 3 mit Wasserdampf beaufschlagt werden. Dies ermöglicht, die Biomasse 2 im Reaktionsraum 3 bei einem Druck von z.B. P ≈ 20 bar auf eine Temperatur T von über 160 °C zu erhitzen.

Wenn der über das Heizungsrohr 26 in den Reaktionsraum 3 eingeleitete Wasserdampf die Biomasse 2 in dem Reaktionsbehälter 4 soweit erwärmt hat, dass er nicht mehr kondensieren kann, werden in der Biomasse 2 im Reaktionsbehälter Dampfblasen 35 gebildet. Die Dampfblasen 35 steigen im Reaktionsbehälter 4 auf. Sie bewegen sich dabei durch die Biomasse 2. Die Dampfblasen 35 bewirken, dass die Reaktionsprodukte, die bei der hydrothermalen Karbonisierung von Biomasse 2 im Reaktionsbehälter 4 entstehen, gut durchmischt werden.

Die Vorrichtung 1 zur hydrothermalen Karbonisierung von Biomasse hat eine als Steigrohr ausgebildete Rohrleitung 5. Die Rohrleitung 5 ist mit dem Reaktionsraum 3 des Reaktionsbehälters 4 verbunden. Das Steigrohr 5 ist so an den Reaktorbehälter 3 angeschlossen, dass ein genügender Abstand zur Oberfläche der Biomasse 2 gewährleistet ist und keine Biomasse in das Steigrohr gelangen und dieses verstopfen kann. Die Rohrleitung 5 hat eine Kondensationsstrecke 6 für Wasserdampf 11. An die Kondensationsstrecke 6 schließt sich ein Pufferabschnitt 7 für die Aufnahme von Gas an. In einem Leitungsabschnitt zwischen dem Pufferabschnitt 7 und einem zu dem Pufferabschnitt 7 weisenden Bereich der Kondensationsstrecke 6 wirkt die Rohrleitung 5 als Steuerkanal 34. In den Steuerkanal 34 mündet ein Dampfablasskanal 33. Die Mündung des Dampfablasskanals 33 in den Steuerkanal 34 befindet sich im Bereich des zum Pufferabschnitt 7 weisenden Bereichs der Kondensationsstrecke 6. Es ist auch möglich, die Mündung des Dampfablasskanals 33 in den Steuerkanal 34 auch knapp oberhalb der Kondensationsstrecke 6 zwischen dem Pufferabschnitt 7 und der Kondensationsstrecke 6 in der Rohrleitung 5 anzuordnen.

Der Dampfablasskanal 33 enthält ein Druckbegrenzungsventil 8. Der Ansprechdruck des Druckbegrenzungsventils 8 ist einstellbar. Der Pufferabschnitt 7 in der Rohrleitung 5 ist mit einem steuerbaren Absperrventil 9 abgeschlossen. Das Druckbegrenzungsventil 8 und das Absperrventil 9 bilden Steuerorgane für die Einstellung des Drucks in der Rohrleitung 5 und im Reaktionsbehälter 4.

In der Vorrichtung 1 zur hydrothermalen Karbonisierung von Biomasse gibt es einen Kompressor 27 für Pressluft. Dem Kompressor 27 ist ein Druckbegrenzungsventil 29 zugeordnet. Mittels des Kompressors 27 kann der Pufferabschnitt 7 und die Kondensationsstrecke 6 der Rohrleitung 5 über das Absperrventil 9 mit Pressluft beaufschlagt werden.

Die Kondensationsstrecke 6 der Rohrleitung 5 ist von einem Wärmetauscher 10 für das Abführen von Wärme umgeben. Der Wärmetauscher 10 ist sekundärseitig an ein Leitungssystem 12 angeschlossen, in dem ein Wärmträgermedium 15 in Form von Thermoöl geführt ist. Das Leitungssystem 12 bildet mit dem Wärmetauscher 10 und einem Wärmeverbraucher 24 einen Wärmeträgerkreislauf.

Für das Fördern des Wärmeträgers ist in dem Leitungssystem 12 eine Pumpe 22 vorgesehen. Um den Wärmeträgerfluss zu erfassen, gibt es im Leitungssystem 12 einen Masseflusssensor 14. Darüber hinaus sind in das Leitungssystem 12 für Wärmeträger ein Temperatursensor 16 und ein Temperatursensor 18 integriert. Mittels des Temperatursensors 18 kann die Temperatur des in den Wärmetauscher 10 einströmenden Wärmeträgers 15 erfasst werden. Der Temperatursensor 16 dient dazu, die Wärmeträgertemperatur für den aus dem Wärmetauscher 10 herausströmenden Wärmeträger 15 zu bestimmen.

Die Vorrichtung 1 zur hydrothermalen Karbonisierung von Biomasse umfasst eine Steuereinheit 25. Die Steuereinheit 25 ist über elektrische Leitungen 36,37,38 mit dem Masseflusssensor 14 sowie den Temperatursensoren 16,18 verbunden. Über die Steuereinheit 25 können über Steuerleitungen 39,40,41 das Druckbegrenzungsventil 8 und die Absperrventile 9,29 angesteuert werden.

Wenn der Reaktionsbehälter 4 so weit aufgeheizt ist, dass der Druck des Wasserdampfs 11 im Reaktionsraum 3 größer ist als der Druck der Luft und der anderen Gase im Reaktionsraum 3, so beginnt der Wasserdampf 11, die Luft und andere Gase im Reaktionsraum 3 zu verdrängen. Wasserdampf 11 und Luft aus dem Reaktionsraum 3 weichen dann aus dem Reaktionsbehälter 3 in die Rohrleitung 5 aus. Sie steigen dann dort zur Kondensationsstrecke 6 auf. Hier kondensiert der Wasserdampf 11 aus dem Reaktionsraum 3 zu Flüssigkeit, d.h. Wasser. Dabei gibt der Wasserdampf 11 über den Wärmetauscher 10 seine Verdampfungswärme an den Wärmeträger 15 im Leitungssystem 12 ab.

Das Druckbegrenzungsventil 8 ist mittels der Steuervorrichtung 25 zunächst für einen Druck von P ≈ 20 bar eingestellt. Wird dieser Druck am Druckbegrenzungsventil 8 überschritten, so öffnet sich das Ventil 8. Wasserdampf und nicht kondensierbare Gase strömen dann so lange über das Druckbegrenzungsventil 8 ins Freie, bis der Druck am Druckbegrenzungsventil 8 wieder dem von der Steuervorrichtung 25 vorgegebenen Wert entspricht.

Mittels des Druckbegrenzungsventils 8 ist es möglich, den Druck P und damit den Dampfdruck P_{D} im Reaktionsraum 3 des Reaktionsbehälters 4 einzustellen. Damit lässt sich die Temperatur T im Reaktionsbehälter steuern. Zwischen Dampfdruck und Temperatur bei Wasser besteht eine exponentielle Beziehung. Ein Dampfdruck von P_{D} = 20 bar im Reaktionsbehälter 4 entspricht einer Temperatur von T ≈ 210 °C. In umfangreichen Versuchen hat sich herausgestellt, dass die Vorrichtung 1 sehr gut im Temperaturbereich zwischen 160 °C und 250 °C betrieben werden kann und es in diesem Temperaturbereich durch Steuern des Druckbegrenzungsventils 8 möglich ist, die Konzentration von aromatischen und aliphatischen Kohlenwasserstoffverbindungen in dem aus Biomasse in dem Reaktionsbehälter 4 entstehenden Reaktionsprodukt kontrolliert einzustellen.

Im Unterschied zu Wasserdampf werden Luft und andere Gase aus dem Reaktionsraum 3 in der Kondensationsstrecke 6 der Rohrleitung 5 nicht kondensiert: Diese Medien, wie etwa auch Methan oder CO₂, steigen im Rohrleitungssystem 5 in den zu dem mit dem Absperrventil 9 verschlossenen Pufferabschnitt 7 auf. Dort werden sie gesammelt. Im Steuerkanal 34 oberhalb des Dampfablasskanals 33 und im Pufferabschnitt 7 der Rohrleitung 5 gibt es dann Medium 19, das im Wärmetauscher 10 nicht kondensiert.

Ab einer Temperatur von T = 160 °C bis 180 °C und einem Druck von P ≈ 6,2 bis 10 bar beginnt die chemische Reaktion der hydrothermalen Karbonisierung von Biomasse. Diese Reaktion verläuft exotherm, d.h. es wird Wärme freigesetzt. Die bei der Reaktion freigesetzte Wärme wird aus dem Reaktionsraum 3 über den in die Rohrleitung 5 steigenden Wasserdampf 11 zu der Kondensationsstrecke 6 der Rohrleitung 5 übertragen. Hier kondensiert der Wasserdampf aus dem Reaktionsraum 3. Das dabei anfallende Kondensat 17 in Form von Wasser fließt dann unter Einwirkung der Schwerkraft an der Wandung der Rohrleitung 5 in den Reaktionsraum 3 des Reaktionsbehälters 4 zurück. Dies hat eine entsprechende Kühlung der Biomasse 2 im Reaktionsbehälter 4 zur Folge.

Durch Vorgeben eines geeigneten Ansprechdrucks für das Druckbegrenzungsventil 8 lässt sich dabei die Temperatur T der Biomasse 2 im Reaktionsraum 3 des Reaktionsbehälters 4 auf einen für die hydrothermalen Karbonisierung der Biomasse 2 günstigen Wert einstellen:

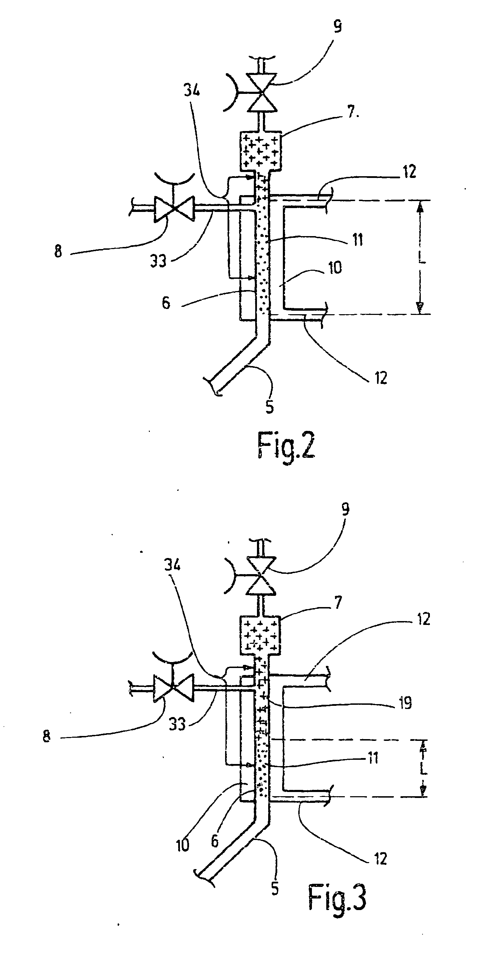

Die Fig. 2 zeigt einen Ausschnitt der Rohrleitung 5 mit der Kondensationsstrecke 6 aus der Vorrichtung 1 der hydrothermalen Karbonisierung von Biomasse. Wenn über den Wärmetauscher 10 mehr Wärme abgeführt wird als bei der hydrothermalen Karbonisierung der Biomasse 2 im Reaktionsbehälter 4 entsteht, so nimmt die Temperatur T dort ab. Damit verbunden ist ein entsprechendes Absinken des Dampfdrucks P_{D} im Reaktionsbehälter 4 und in der Rohrleitung 5.

Von Vorteil ist es, das Volumen des Pufferabschnitts 7 in der Weise auf das Volumen des Reaktionsbehälters 4 abzustimmen, dass bei einer maximalen Betriebstemperatur Tₘₐₓ des Reaktors Gas und Luft aus dem Puffervolumen 7 nicht in die Kondensationsstrecke 6 hineinragen.

Wenn jedoch der Dampfdruck P_{D} im Reaktionsbehälter 4 sinkt, dehnt sich, wie in Fig. 3 gezeigt, das im Pufferabschnitt 7 der Rohrleitung 5 eingeschlossene Medium 19 in Form von Gas und Luft durch den Steuerkanal 34 in die Kondensationsstrecke 6 hinein aus. Das Medium 19 verdrängt dabei den Wasserdampf 11 in der Rohrleitung 5. Es gibt dann weniger Wasserdampf 11 in der Kondensationsstrecke. Damit verringert sich die wirksame Länge L der Kondensationsstrecke 6. Infolgedessen kondensiert im Bereich der Kondensationsstrecke 6 weniger Wasserdampf. Dadurch wird weniger Wärme aus dem Reaktionsbehälter 4 der Vorrichtung aus Fig. 1 zur hydrothermalen Karbonisierung von Biomasse abgeführt. Dies wirkt einem weiteren Absinken der Temperatur T im Reaktionsbehälter 4 entgegen.

Wird über die Kondensationsstrecke 6 weniger Wärme aus dem Reaktionsraum 3 abgeführt, als bei der exothermen Reaktion der hydrothermalen Karbonisierung entsteht, so steigt die Temperatur von Wasser und Biomasse 2 im Reaktionsraum 3. Wenn sich mit dem Anstieg der Temperatur T wieder ein Druck P einstellt, der den mittels der Steuervorrichtung 25 vorgegebenen Druckwert P des Druckbegrenzungsventils 8 überschreitet, so wird das Druckbegrenzungsventil 8 geöffnet. Wasserdampf und nicht kondensierbares Gas strömen dann so lange über den Dampfablasskanal 33 aus der Rohrleitung 5, bis der Druck P am Druckbegrenzungsventil 8 wieder unter den vorgegebenen Druckwert gefallen ist. Dabei bleibt lediglich in dem Pufferabschnitt 7 und dem Steuerkanal 34 nicht kondensierbares Gas zurück, mittels dessen sich der Druck P und die Temperatur T im Reaktionsraum 3 regeln lassen. Über das selbstregelnde Einstellen der wirksamen Länge L der Kondensationsstrecke 6 der Rohrleitung 5 wird so eine stabile Regelung des Drucks P und der Temperatur T im Reaktionsraum 3 geschaffen.

Mit dem Kompressor 27 ist es möglich, in einer Anfangsphase einer hydrothermalen Karbonisierungsreaktion im Reaktionsbehälter 4 den Abfluss von Wärme über die Rohrleitung 5 zu unterbinden. Hierfür wird der Pufferabschnitt 7 und die Kondensationsstrecke 6 der Rohrleitung 5 mit dem Kompressor 27 mit Luft befüllt. Dies unterbindet das Kondensieren von Wasserdampf aus der Biomasse 2 im Reaktionsbehälter 4 in der Kondensationsstrecke 6. Damit wird erreicht, dass der Biomasse 2 im Reaktionsbehälter 4 keine Wärme entzogen wird.

Die mit den Temperatursensoren 16,18 sowie dem Masseflusssensor 14 im Leitungssystem 12 für den Wärmeträger verbundene Steuervorrichtung 25 ermöglicht insbesondere eine Überwachung der Temperatur T im Reaktionsraum 3 der Vorrichtung zur hydrothermalen Karbonisierung von Biomasse 2 und damit eine Kontrolle der chemischen Reaktion im Reaktionsbehälter 4.

Wenn die hydrothermale Karbonisierung im Reaktionsbehälter abgeklungen ist, ist es wünschenswert, diesen schnell abzukühlen, damit er wieder mit Biomasse befüllt werden kann. Bei der Vorrichtung 1 zur hydrothermalen Karbonisierung von Biomasse können der Reaktionsbehälter 4 und die Reaktionsprodukte auf Zimmertemperatur abgekühlt werden, indem der Dampfdruck P_{D} in der Rohrleitung 5 auf einen Druck unterhalb von Atmosphärendruck eingestellt wird. Dazu wird, während der Dampfdruck P_{D} im Reaktionsbehälter 4 noch über dem Atmosphärendruck liegt, mittels der Steuervorrichtung 25 das Absperrventil 9 geöffnet, um die in der Rohrleitung eingeschlossenen, nicht kondensierbaren Gase freizusetzen. Diese Maßnahme verhindert insbesondere, dass das nicht kondensierbare Gas bei sinkendem Dampfdruck im Reaktionsbehälter 4 den Wasserdampf aus der Rohrleitung 5 verdrängt. Die im Wasserdampf gespeicherte Wärme kann dann über die Kondensationsstrecke 6 der Rohrleitung 5 an den Wärmetauscher 10 abgegeben werden.

Bevor Reaktionsprodukte nach dem Abkühlen aus dem Reaktionsbehälter 4 abgelassen werden, ist es allerdings günstig, zunächst das Überdruckventil 9 in der Rohrleitung 5 zu öffnen. Dies bewirkt einen Druckausgleich zwischen der Atmosphäre und dem Inneren des Druckbehälters 4. Wird danach das Auslassventil 32 geöffnet, so fließen die Reaktionsprodukte der hydrothermalen Karbonisierung von Biomasse aufgrund der Schwerkraft aus dem Reaktionsbehälter 4 heraus.

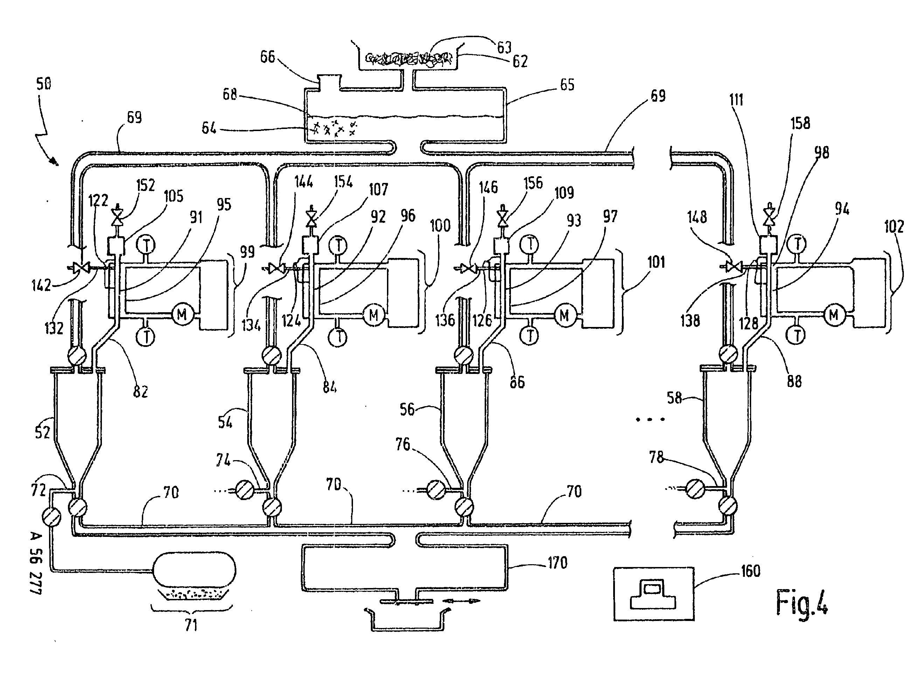

Die Fig. 4 zeigt eine Anlage 50 zur hydrothermalen Karbonisierung von Biomasse mit mehreren Reaktionsbehältern 52,54,56,58. Die Anlage 50 umfasst eine Zerkleinerungseinrichtung 62 für Biomasse 63, aus der zerkleinerte Biomasse 64 einem Tank 65 zugeführt werden kann. Der Tank 65 hat einen Zuführkanal 66 für Wasser, um die zerkleinerte Biomasse 64 im Tank 65 mit Wasser 68 zu versetzen. Der Tank 65 ist über ein Leitungssystem 69 mit den Reaktionsbehältern 52,54,56,58 verbunden.

In der Anlage ist eine Heizeinrichtung mit Heizungsrohren 72,74,76 und 78 vorgesehen, an welche die Reaktionsbehälter 52,54,56 und 58 angeschlossen sind. Für das Sammeln der Reaktionsprodukte gibt es eine Sammelleitung 70 zu einem Sammelsilo 170. Die Anlage 50 umfasst eine Dampferzeugungseinrichtung 71, aus der den Reaktionsbehältern 52,54,56,58 über die Heizungsrohre Wasserdampf zugeführt werden kann. Mit der Anlage kann dann insbesondere die bei der hydrothermalen Karbonisierung in einem Reaktionsbehälter anfallende Abwärme, z.B. die Abwärme aus dem Reaktionsbehälter 52 für das Anfahren der Reaktion in einem anderen Reaktionsbehälter, etwa im Reaktionsbehälter 54 eingesetzt werden.

Für das Regeln von Druck P und Temperatur T im Reaktionsraum haben die Reaktionsbehälter 52,54,56,58 Rohrleitungen 82,84,86,88 mit einer Kondensationsstrecke 91,92,93 und 94.

Den Kondensationsstrecken 91,92,93 und 94 ist jeweils ein Wärmetauscher 95,96,97,98 und ein Wärmeträgerkreislauf mit einem Wärmeverbraucher 99,100,101,102 zugeordnet. Im Wärmeträgerkreislauf befinden sich jeweils zwei Temperatursensoren und ein Masseflusssensor.

Vorzugsweise sind die Wärmeverbraucher 99, 100, 101, 102 mit der Dampferzeugungsvorrichtung 71 gekoppelt, was in Fig. 4 nicht gezeigt ist. Dann kann Wärme aus den Wärmeverbrauchern 99, 100, 101, 102 steuerbar an die Dampferzeugungsvorrichtung 71 abgegeben werden. Dies ermöglicht insbesondere das Einsparen von Energie bei der Dampferzeugung.

Eine jede Rohrleitung 82,84,86,88 umfasst einen Pufferabschnitt 105, 107, 109, 111 mit Steuerkanal 122,124,126,128, einen Dampfablasskanal 132,134,136,138 sowie ein Druckbegrenzungsventil 142,144,146,148 mit einstellbarem Ansprechdruck und ein Absperrventil 152,154,156,158 als Steuerorgan. Für das Steuern der Anlage 50 ist eine Steuervorrichtung mit Rechnereinheit 160 vorgesehen.

Zusammenfassend ist folgendes festzuhalten: Die Erfindung ist eine Vorrichtung 1 zur hydrothermalen Karbonisierung von Biomasse 2 mit einem einen Reaktionsraum 3 aufheizenden Reaktionsbehälter. Bei der Vorrichtung 1 ist eine mit dem Reaktionsraum 3 verbundene Rohrleitung 5 vorgesehen. Die Rohrleitung 5 weist eine Kondensationsstrecke 6 für Wasserdampf 11 auf, der im Betriebszustand aus dem mit Biomasse 2 befüllten Reaktionsraum in die Rohrleitung gelangt. Die Rohrleitung 5 führt das an der Kondensationsstrecke 6 anfallende Kondensat 17 in den Reaktionsraum 3 zurück. Die Rohrleitung 5 weist einen mit dem Reaktionsraum 3 kommunizierenden Pufferabschnitt für die Aufnahme von Gas auf. Bei der Vorrichtung 1 ist ein Steuerorgan 9 für die Einstellung des Drucks P in der Rohrleitung 5 vorgesehen.

## Patentansprüche

1. Vorrichtung (1) zur hydrothermalen Karbonisierung von Biomasse (2) mit einem einen Reaktionsraum (3) aufweisenden Reaktionsbehälter (4),
**dadurch gekennzeichnet, dass**
an *den Reaktionsbehälter (4) eine Rohrleitung (5) angeschlossen ist,*
*die den Reaktionsraum (3) mit einem Pufferabschnitt (7) für die Aufnahme von Gas verbindet,*
die eine Kondensationsstrecke (6) für Wasserdampf aufweist, der im Betriebszustand aus dem mit Biomasse (2) befüllten Reaktionsraum (3) in die Rohrleitung (5) gelangt *und der in der Kondensationsstrecke (6) durch Kondensieren in Kondensat überführt wird, das in den Reaktionsraum zurückgeführt wird.*
*die einen als Steuerkanal (34) wirkenden Abschnitt hat der das Einstellen der wirksamen Länge der Kondensationsstrecke (6) mit Gas aus dem Pufferabschnitt (7) ermöglicht, und*
*die mit einem als Dampfablosskanal wirkenden Leitungsabschnitt (33) verbunden ist, der auf der zu der Kondensationsstrecke (6) weisenden Seite des Pufferabschnitts (7) in den Steuerkanal (34) mündet, wobei die Mündung des als Dampfabiasskanals wirkenden Leitungsabschnitts (33) in die Rohrleitung (5) in einem zu dem Pufferabschnift (7) weisenden Endbereich der Kondensationsstrecke (6) oder in einem Bereich angeordnet ist, der zwischen der Kondensationsstrecke (6) und dem Pufferabschnitt (7) der Rohrleitung (5) liegt, und*
*wobei für die Einstellung des Drucks (P) in der Rohrleitung (5) ein Steuerorgan (8,* 9) *vorgesehen ist, das ein in dem als Dampfablasskanal wirkenden Leitungsabschnitt (33) angeordnetes Druckbegrenzungsventil (8) umfasst.*

2. Vorrichtung nach Anspruch 1, **dadurch gekennzeichnet, dass** die Rohrleitung als Steigrohr (5) ausgebildet ist.

3. *Vorrichtung nach Anspruch 1 oder 2, **dadurch gekennzeichnet, dass** über die Rohrleitung (5) das in der Kondensationsstrecke (6) anfallende Kondensat in den Reaktionsraum (3) zurückführbar ist.*

4. Vorrichtung nach *einem der Ansprüche 1 bis 3,* **dadurch gekennzeichnet, dass** die Kondensationsstrecke (6) der Rohrleitung (5) für das Abführen von Wärme *durch einen sekundärseitig an ein Leitungssystem (12) für einen Wärmeträger angeschlossenen Wärmetauscher (10) geführt ist.*

5. Vorrichtung nach Anspruch 4, **dadurch gekennzeichnet, dass** Mittel (16,18) zum Erfassen *des über den* Wärmeaustauscher (10) in den *Wärmeträger* im Leitungssystem (12) *abgeführten Wärmestroms* vorgesehen sind.

6. Vorrichtung nach Anspruch 5, **dadurch gekennzeichnet, dass** eine Steuereinheit (25) vorgesehen ist, die *mittels des Steuerorgans (8,* 9) *den Dampfdruck in dem Reaktionsraum (3) aufgrund des erfassten, in den Wärmeträger im Leitungssystem (12) abgeführten Wärmestroms* steuert.

7. Vorrichtung nach einem der Ansprüche 1 bis 6, **dadurch gekennzeichnet, dass** das Steuerorgan ein *Abspenventil (9) umfasst, mit dem der Pufferabschnitt (7) abgeschlossen werden kann.*

8. Vorrichtung nach einem der Ansprüche 1 bis 7, **dadurch gekennzeichnet, dass** das Druckbegrenzungsventil (8) mit einstellbarem Ansprechdruck ausgebildet ist.

9. Vorrichtung nach einem der Ansprüche 1 bis 8, **dadurch gekennzeichnet, dass** ein Kompressor (27) für *das Erzeugen* von Pressluft vorgesehen ist, *mit welcher der als* Steuerkanal (34) wirkende Abschnitt der Rohrleitung (5) *wenigstens teilweise ausgerfüllt werden kann.*

10. Vorrichtung nach einem der Ansprüche 1 bis 9, **dadurch gekennzeichnet, dass** eine Heizeinrichtung (26) *für das Erhitzen von Biomasse In dem* Reaktionsraum (3) vorgesehen ist.

11. Vorrichtung nach Anspruch 10, **dadurch gekennzeichnet, dass** die Heizeinrichtung ein Heizungsrohr (26) für das Zuführen vom Dampf in den Reaktionsraum (3) umfasst.

12. Anlage (50) zur hydrothermalen Karbonisierung von Biomasse mit zwei oder mehr Vorrichtungen gemäß einem der Ansprüche 1 bis 11.

13. Verfahren zur hydrothermalen Karbonisierung von Biomasse, bei dem der Reaktionsraum (3) eines Reaktionsbehälters (4) mit Biomasse (2) befüllt wird, die Kohlenstoff, Sauerstoff und Wasserstoff enthält, bei dem eine sauere Umgebung der Biomasse (2) eingestellt wird, und bei dem die Biomasse (2) im Reaktionsraum (3) auf eine Reaktionstemperatur erwärmt wird, **dadurch gekennzeichnet, dass** *der in dem Reaktionsraum erzeugte Dampf aus der Biomasse (2) über eine mit dem Reaktionsraum (3) verbundene Rohrleitung (5) zu einer Kondensationsstrecke (6) für Dampf geführt wird, deren wirksame Länge (L) für das Einstellen der Temperatur in dem Reaktionsraum (3) mit Gas variiert werden kann, das aus einem Pufferabschnitt (7) zugeführt wird, wobei das In der Kondensationsstrecke (6) gebildete Kondensat in den Reaktionsraum (3) zurückgeführt wird, und wobei der in die Kondensationsstrecke (6) geführte Dampf bei Überschreiten eines vorgegebenen Drucks über einen als Dampfablasskanal wirkenden Leitungsabschnitt* (33) *vor einem Eintreten in den Pufferabschnitt (7) freigesetzt wird.*

14. Verfahren nach Anspruch *13,* **dadurch gekennzeichnet, dass** *die Temperatur der Biomasse (2) in dem Reaktionsraum (3) durch das Steuern oder Regeln des Dampfdrucks in dem Reaktionsraum (3) auf eine Temperatur T in dem Bereich 160.C ≤ T* ≤ *250°C eingestellt wird.*

## Claims

1. A device (1) for the hydrothermal carbonization of biomass (2), with a reaction vessel (4) having a reaction chamber (3),
**characterized in that**
a pipeline (5) is connected to the reaction vessel (4),
which pipeline connects the reaction chamber (3) to a buffer portion (7) for receiving gas,
which pipeline has a condensation section (6) for water vapor which, in the operating state, gets into the pipeline (5) from the reaction chamber (3) filled with biomass (2) and in the condensation section (6) is transformed by condensing into condensate, which is returned into the reaction chamber,
which pipeline has a portion acting as a control channel (34), which makes it possible to set the effective length of the condensation section (6) with gas from the buffer portion (7), and
which pipeline is connected to a portion of line (35) acting as a vapor outlet channel, which opens out into the control channel (34) on the side of the buffer portion (7) toward the condensation section (6), the opening of the portion of line (33) that is acting as a vapor outlet channel into the pipeline (5) being arranged in an end region of the condensation section (6) toward the buffer portion (7) or in a region which lies between the condensation section (6) and the buffer portion (7) of the pipeline (5), and
a control element (8, 9), which comprises a pressure relief valve (8) arranged in the portion of line (33) that is acting as a vapor outlet channel, being provided for setting the pressure (P) in the pipeline (5).

2. The device as claimed in claim 1, **characterized in that** the pipeline is formed as a rising pipe (5).

3. The device as claimed in claim 1 or 2, **characterized in that** the condensate occurring in the condensation section (6) can be returned into the reaction chamber (3) via the pipeline (5).

4. The device as claimed in one of claims 1 to 3, **characterized in that**, for the removal of heat, the condensation section (6) of the pipeline (5) is led through a heat exchanger (10) connected on the secondary side to a system of lines (12) for a heat transfer medium.

5. The device as claimed in claim 4, **characterized in that** means (16, 18) for recording the flow of heat removed via the heat exchanger (10) into the heat transfer medium in the system of lines (12) are provided.

6. The device as claim 5, **characterized in that** a control unit (25) which controls the vapor pressure in the reaction chamber (3) by means of the control element (8, 9) on the basis of the recorded flow of heat removed into the heat transfer medium in the system of lines (12) is provided.

7. The device as claimed in one of claims 1 to 6, **characterized in that** the control element comprises a shut-off valve (9), with which the buffer portion (7) can be closed off.

8. The device as claimed in one of claims 1 to 7, **characterized in that** the pressure relief valve (8) is formed with a settable response pressure.

9. The device as claimed in one of claims 1 to 8, **characterized in that** a compressor (27) for generating compressed air is provided, with which compressor the portion of the pipeline (5) acting as a control channel (34) can be at least partially filled.

10. The device as claimed in one of claims 1 to 9, **characterized in that** a heating device (26) for heating biomass in the reaction chamber (3) is provided.

11. The device as claimed in claim 10, **characterized in that** the heating device comprises a heating pipe (26) for feeding vapor into the reaction chamber (3).

12. An installation (50) for the hydrothermal carbonization of biomass with two or more devices as claimed in one of claims 1 to 11.

13. A process for the hydrothermal carbonization of biomass, in which the reaction chamber (3) of a reaction vessel (4) is filled with biomass (2), which contains carbon, oxygen and hydrogen, in which an acidic environment of the biomass (2) is set, and in which the biomass (2) in the reaction chamber (3) is heated to a reaction temperature, **characterized in that** the vapor generated in the reaction chamber from the biomass (2) is passed by a pipeline (5) connected to the reaction chamber (3) to a condensation section (6) for vapor, the effective length (L) of which can be varied with gas which is fed in from a buffer portion (7) for setting the temperature in the reaction chamber (3), the condensate that forms in the condensation section (6) being returned into the reaction chamber (3), and the vapor that is passed into the condensation section (6) being released via a portion of line (35) acting as a vapor outlet channel before it enters the buffer portion (7) if a prescribed pressure is exceeded.

14. The process as claimed in claim 13, **characterized in that** the temperature of the biomass (2) in the reaction chamber (3) is set by controlling or regulating the vapor pressure in the reaction chamber (3) to a temperature T in the range 160°C ≤ T ≤ 250°C.

## Revendications

1. Dispositif (1) destiné à la carbonisation hydrothermale de biomasse (2), avec un récipient de réaction (4) comportant une chambre de réaction (3),
**caractérisé en ce que**
au récipient de réaction (4) se raccorde une conduite (5),
qui relie la chambre de réaction (3) à une partie tampon (7) destinée à contenir du gaz,
qui présente une zone de condensation (6) pour la vapeur d'eau, qui en état de fonctionnement arrive dans la conduite (5) à partir de la chambre de réaction (3) remplie de biomasse (2) et qui est transformée par condensation dans la zone de condensation (6) en condensat qui est renvoyé dans la chambre de réaction,
qui comprend une partie faisant fonction de canal de commande (34), qui permet le réglage de la longueur utile de la zone de condensation (6) avec du gaz provenant de la partie tampon (7), et
qui est reliée à une partie de conduite (33) faisant fonction de canal d'évacuation de vapeur, qui débouche dans le canal de commande (34) sur le côté de la partie tampon (7) tourné vers la zone de condensation (6), dans lequel l'embouchure de la partie de conduite (33) faisant fonction de canal d'évacuation de vapeur dans la conduite (5) est disposée dans une région d'extrémité de la zone de condensation (6) tournée vers la partie tampon (7) ou dans une région qui est située entre la zone de condensation (6) et la partie tampon (7) de la conduite (5), et
dans lequel il est prévu, pour le réglage de la pression (P) dans la conduite (5), un organe de commande (8, 9) qui comprend une soupape de limitation de pression (8) disposée dans la partie de conduite (33) faisant fonction de canal d'évacuation de vapeur.

2. Dispositif selon la revendication 1, **caractérisé en ce que** la conduite est réalisée sous la forme d'une colonne montante (5).

3. Dispositif selon la revendication 1 ou 2, **caractérisé en ce que** le condensat produit dans la zone de condensation (6) peut être renvoyé dans la chambre de réaction (3) par la conduite (5).

4. Dispositif selon l'une quelconque des revendications 1 à 3, **caractérisé en ce que** la zone de condensation (6) de la conduite (5) est guidée, pour l'évacuation de chaleur, à travers un échangeur de chaleur (10) raccordé côté secondaire à un système de conduites (12) pour un porteur de chaleur.

5. Dispositif selon la revendication 4, **caractérisé en ce qu'**il est prévu des moyens (16, 18) pour détecter le flux thermique évacué par l'échangeur de chaleur (10) dans le porteur de chaleur dans le système de conduites (12).

6. Dispositif selon la revendication 5, **caractérisé en ce qu'**il est prévu une unité de commande (25), qui commande, au moyen de l'organe de commande (8, 9), la pression de vapeur dans la chambre de réaction (3) sur la base du flux thermique détecté, évacué dans le porteur de chaleur dans le système de conduites (12).

7. Dispositif selon l'une quelconque des revendications 1 à 6, **caractérisé en ce que** l'organe de commande comprend une soupape d'arrêt (9), avec laquelle la partie tampon (7) peut être fermée.

8. Dispositif selon l'une quelconque des revendications 1 à 7, **caractérisé en ce que** la soupape de limitation de pression (8) est réalisée avec une pression de réponse réglable.

9. Dispositif selon l'une quelconque des revendications 1 à 8, **caractérisé en ce qu'**il est prévu un compresseur (27) pour la production d'air comprimé, avec lequel la partie de la conduite (5) faisant fonction de canal de commande (34) peut être remplie au moins en partie.

10. Dispositif selon l'une quelconque des revendications 1 à 9, **caractérisé en ce qu'**il est prévu un dispositif de chauffage (26) pour le chauffage de biomasse dans la chambre de réaction (3).

11. Dispositif selon la revendication 10, **caractérisé en ce que** le dispositif de chauffage comprend un tube de chauffage (26) pour l'amenée de vapeur dans la chambre de réaction (3).

12. Installation (50) destinée à la carbonisation hydrothermale de biomasse avec deux ou plus de deux dispositifs selon l'une quelconque des revendications 1 à 11.

13. Procédé pour la carbonisation hydrothermale de biomasse, dans lequel on remplit la chambre de réaction (3) d'un récipient de réaction (4) avec de la biomasse (2), qui contient du carbone, de l'oxygène et de l'hydrogène, dans lequel on règle un environnement acide de la biomasse (2), et dans lequel on chauffe la biomasse (2) à une température de réaction dans la chambre de réaction (3), **caractérisé en ce que** l'on conduit la vapeur produite dans la chambre de réaction à partir de la biomasse (2) par une conduite (5) reliée à la chambre de réaction (3) à une zone de condensation (6) pour la vapeur, dont on peut faire varier la longueur utile (L) pour le réglage de la température dans la chambre de réaction (3) avec du gaz qui est fourni à partir d'une partie tampon (7), dans lequel on renvoie le condensat formé dans la zone de condensation (6) dans la chambre de réaction (3), et dans lequel on libère la vapeur conduite dans la zone de condensation (6), en cas de dépassement d'une pression prédéterminée, par une partie de conduite (33) faisant fonction de canal d'évacuation de vapeur avant une entrée dans la partie tampon (7).

14. Procédé selon la revendication 13, **caractérisé en ce que** l'on règle la température de la biomasse (2) dans la chambre de réaction (3) en commandant ou en régulant la pression de vapeur dans la chambre de réaction (3) à une température T située dans la plage de 160°C ≤ T ≤ 250°C.
